(19) Europäisches Patentamt
European Patent Office
Office européen des brevets

(11) **EP 3 178 861 B1**

(12) **EUROPÄISCHE PATENTSCHRIFT**

(45) Veröffentlichungstag und Bekanntmachung des Hinweises auf die Patenterteilung:
**28.08.2019  Patentblatt 2019/35**

(51) Int Cl.:
**C08G 59/50** *(2006.01)*   **C08G 59/56** *(2006.01)*
**C08J 5/04** *(2006.01)*   **C08G 59/22** *(2006.01)*

(21) Anmeldenummer: **15199599.0**

(22) Anmeldetag: **11.12.2015**

(54) **LATENTE EPOXIDHARZFORMULIERUNGEN FÜR FLÜSSIGIMPRÄGNIERPROZESSE ZUR HERSTELLUNG VON FASERVERBUNDWERKSTOFFEN**

LATENT EPOXY RESIN FORMULATIONS FOR LIQUID IMPREGNATION PROCESSES FOR MAKING FIBRE REINFORCED COMPOSITE MATERIALS

FORMULES DE RESINE EPOXYDE LATENTES POUR DES PROCEDES D'IMPREGNATION DE LIQUIDE DESTINEES A LA FABRICATION DE MATIERES COMPOSITES FIBREUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.06.2017  Patentblatt 2017/24**

(73) Patentinhaber: **Evonik Degussa GmbH**
**45128 Essen (DE)**

(72) Erfinder:
• **ORTELT, Martina, Dr.**
**74223 Flein (DE)**
• **FUCHSMANN, Dirk**
**45721 Haltern am See (DE)**

• **LANGKABEL, Eike**
**41844 Wegberg (DE)**
• **KOHLSTRUK, Britta**
**45966 Gladbeck (DE)**
• **BALTHASAR, Jaclyn**
**21509 Glinde (DE)**

(56) Entgegenhaltungen:
**EP-A1- 2 752 403      WO-A1-2005/111135**
**WO-A1-2010/010048   DE-A1- 2 640 408**
**DE-A1- 2 640 409**

Bemerkungen:
Die Akte enthält technische Angaben, die nach dem Eingang der Anmeldung eingereicht wurden und die nicht in dieser Patentschrift enthalten sind.

EP 3 178 861 B1

**Beschreibung**

Gegenstand der Erfindung sind Epoxid-Zusammensetzungen, bestehend aus mindestens einer Harzkomponente und mindestens einer Härterkomponente, wobei die Zusammensetzung geeignet ist als duroplastische Matrix zur Herstellung von Faser-Matrix-Halbzeugen und ausgehärteten Faser-Matrix-Laminaten, sogenannten Composites.

Epoxid-Zusammensetzungen bestehend aus mindestens einem Epoxidharz und mindestens einem Härter, z.B. Amine, Anhydride, Dicyandiamid, sind seit langem bekannt und werden in Anwendungsfeldern wie z.B. Coatings, Composites oder Flooring eingesetzt.

Unter Composites werden in diesem Zusammenhang Verbundwerkstoffe aus Fasern und Kunststoffmatrix verstanden.

Im Rahmen steigender Anforderungen an eine effiziente Nutzung knapper Ressourcen rücken Leichtbaulösungen verstärkt in den Blickpunkt verschiedenster Industrien. Überall dort, wo Massen bewegt werden müssen, sind Faserverbundwerkstoffe / Composites eine interessante Option, da diese hohe spezifische Steifigkeiten und Festigkeiten bei geringem Gewicht bieten. Composites sind aus diesem Grund in der Luftfahrt seit Jahrzehnten etabliert und ohne Faserverbundwerkstoff-Technologien wären z.B. auch Rotorblätter für Windenergieanlagen nicht denkbar. Aufgrund ihres hervorragenden Eigenschaftsprofils rücken diese Werkstoffe auch verstärkt in den Fokus beim Automobilbau. In allen 3 genannten Marktsegmenten werden mechanisch hochfeste Komponenten gefordert, wie Sie durch endlosfaserverstärkte Polymerwerkstoffe erzielt werden können. Die Geometrien dieser Komponenten werden jedoch immer anspruchsvoller (z.B. nimmt die Länge der Rotorblätter von Windenergieanlagen stetig zu, um möglichst viel Windenergie "ernten" zu können), bei gleichzeitiger Forderung nach immer höherer Produktivität.

Der Begriff Composites wird im Rahmen dieser Erfindung insbesondere synonym zu den Begriffen Verbundstoff, Verbund-Bauteile, Verbundwerkstoff, Faserverbundwerkstoff, Verbund-Formteile, faserverstärkte Kunststoffe oder faserverstärkte Bauteile, Prepregs, Faser-Matrix-Halbzeug, SMC (Sheet Moulding Compound) SMC-Composites (SMC-Faser-Matrix-Halbzeuge), CFK, GFK und FVK verwendet.

Verfahren zur Herstellung von Composites lassen sich in einstufige Verfahren, wie z.B. RTM (Resin Transfer Moulding), VARTM (Vacuum Assisted Resin Transfer Moulding) und mehrstufige Verfahren, wie z.B. Prepreg-Technologie, SMC (Sheet Moulding Compound) einteilen.

Der Weg über Faserhalbzeuge (z.B. mit Präpolymeren imprägnierte textile Flächengebilde auf der Basis von Glas- oder Carbonfasern, Prepreg) in einem mehrstufigen Verfahren hat Vorteile. Insbesondere im Bereich der endlosfaserverstärkten Strukturteile bietet die Prepreg-Technologie aufgrund der hervorragenden Benetzungsgüte der Fasern durch die Harzmatrix den Zugang zu mechanisch äußerst hochwertigen Komponenten, weshalb sich die Prepreg-Technologie in der Luftfahrt bereits seit Jahren als das wichtigste Verarbeitungsverfahren zur Herstellung von Composite-Bauteilen etabliert hat. Faserhalbzeuge sind jedoch ihrem Wesen nach zweidimensionale Flächengebilde, weswegen sich ihre Anwendbarkeit auf die Herstellung eben im Wesentlichen zweidimensionaler oder dreidimensionaler Bauteile mit begrenzter geometrischer Komplexität, z.B. Tragflächen- oder Leitwerksteile beschränkt. Die Prepreg-Technologie ist auch bei der Herstellung von Rotorblättern für Windenergieanlagen ein eingeführtes Verfahren.

Demgegenüber werden endlosfaserverstärkte Composite-Bauteile mit hochkomplexen dreidimensionalen Geometrien im RTM-Verfahren hergestellt. Dieses Verfahren ist dadurch gekennzeichnet, dass aus textilen Flächengebilden zunächst sog. endkonturnahe Preforms hergestellt werden. Dabei werden nicht mit Harz imprägnierte Faserprodukte (also Gewebe, Gelege, Vliese, ect. im Anlieferungszustand) zu dreidimensionalen Gebilden endkonturnah vorgeformt und die einzelnen Lagen dabei zur Fixierung verklebt, oder bei besonders komplexen Teilen, vernäht. Diese reine Faserpreform wird dann in eine Kavität gebracht und in der geschlossenen Kavität, z.B. einem beheizten Stahlwerkzeug, mit einer lösemittelfreien Flüssigharzformulierung imprägniert und in der geschlossenen Kavität sofort bis zum Endzustand durchgehärtet (einstufiges Verfahren). Die dabei auftretenden, teilweise hoch komplizierten Fließgeometrien erfordern niedrigviskose Harze mit langen Topfzeiten, um alle Faserfilamente gut zu benetzen. Dementsprechend sind die hierfür eingesetzten Harzsysteme wenig reaktiv und erfordern lange Härtungszeiten bei hohen Temperaturen. Nach der Härtung wird das Fertigteil entformt und ggf. noch nachbearbeitet, z.B. entgratet.

Das einstufige RTM-Verfahren wie oben beschrieben ist jedoch bei der Fertigung von Bauteilen mit sehr großen Abmessungen, wie z.B. Rotorblättern für Windenergieanlagen, oder bei der Fertigung von Prototypen in kleinen Stückzahlen technisch nicht möglich oder wirtschaftlich nicht durchführbar (zu hohes Gewicht der Stahlwerkzeuge und/oder zu hohe Kosten). Hier bedient man sich verschiedener Flüssig-Imprägnierverfahren (Vakuuminfusionsverfahren, Druck max. 1 bar) in Open-Mould-Ausführung, wie z.B. in F. Henning/E. Moeller "Handbuch Leichtbau", Carl-Hanser-verlag, S. 641 ff., beschrieben. Die Werkzeuge bestehen nur aus der Unterhälfte und können neben metallischen Werkstoffen auch aus Composite-Werkstoffen hergestellt sein; die Aufbauten aus den zu imprägnierenden Verstärkungsfasern und ggf. sonstigen vorgefertigten Komponenten oder Kernwerkstoffen sind bei diesen Verfahren nach oben hin mit einer Vakuumfolie abgeschlossen. Die Applikation von Vakuum erzeugt Druckunterschiede von maximal 1 bar, weshalb die in Infusionsverfahren angewendeten Harzsysteme sehr niedrig viskos sein müssen und lange Verarbeitungszeiten aufweisen müssen. Typischerweise sind die Fließwege bei der Fertigung großer Teile lang und die Fließgeschwindigkeit aufgrund des geringen Druckunterschieds gering.

Für diesen Zweck geeignete, wenig reaktive lösemittelfreie Epoxidharz-Zusammensetzungen sind bekannt, z.B. das Harzsystem EPIKOTE™ Resin MGS™ RIMR235 mit EPIKURE™ Curing Agent MGS™ RIMH233, RIMH235-237 der Firma Hexion.

In den Dokumenten DE 2640408, DE 2640409, DE 2640410, DE 2950067 und DE 3328134 wird 2,2,6,6-Tetramethyl-4-piperidylamin (kurz Triacetondiamin oder abgekürzt TAD) als latentes Amin zur Härtung von Epoxidharzen beschrieben. Als Anwendungen kommen dort Oberflächenbeschichtungen mit Schwerpunkt auf Pulverlacken aber auch Formmassen in Frage, die ggf. durch Fasern oder andere Stoffe verstärkt werden können. Als Beispiele werden Kombinationen aus reinem TAD und Epoxidharzen aufgeführt. Diese Systeme sind jedoch ausschließlich heißhärtend und nicht einsetzbar bei Härtungstemperaturen von 70 bis 80°C, wie bei der Fertigung von großen Teilen im Open-Mould-Verfahren, z.B. Rotorblätter für Windenergieanlagen, üblich.

DE 2640408 weiterhin offenbart Epoxidharz-Zusammensetzungen umfassend mindestens eine Epoxidverbindung und eine Härterzusammensetzung umfassend ein Polyamin auf Basis von Triacetondiamin und mindestens ein weiteres Polyamin.

## Aufgabe der Erfindung

Die Performance eines Composites wird neben dem Eigenschaftsbild der gewählten Harzmatrix und der Verstärkungsfaser ganz besonders auch durch die Qualität des Faser-Matrix Verbunds definiert. Eine hohe Verbundqualität setzt voraus, dass die Harzmatrix alle Verstärkungsfasern fehlerlos benetzt. Bei der Fertigung von sehr großen Teilen wie Rotorblättern von Windenergieanlagen muss die Harzformulierung im Vakuuminfusionsverfahren lange Fließwege unter Drücken von maximal 1 bar, überwinden. Dazu kommt, dass die zu imprägnierenden Aufbauten aus Verstärkungsfasern, vorgefertigten Teilen und Kernwerkstoffen häufig neben ihrer Komplexität auch hohe Wandstärken aufweisen. Diese Schichten müssen von der Flüssigharzformulierung vollständig und ohne Fehlstellen durchdrungen und benetzt werden.

Im Zuge des Bedarfes nach der Produktion immer höherer Anteile regenerativer Energie werden die Abmessungen der Rotorblätter von Windenergieanlagen immer größer. Damit kommen herkömmliche Epoxid-Harzformulierungen wie oben genannt an die Grenzen ihrer Prozessierbarkeit und es besteht das Bedürfnis nach Epoxid-Harzformulierungen, die deutlich länger "offen", d.h. deutlich länger niedrigviskos und bei diesen geringen Viskositäten fließfähig sind, um alle Fasern in der erforderlichen Qualität zu benetzen, wobei aus Produktivitätsgründen die Zykluszeit jedoch nicht nennenswert ansteigen darf und sich in der Harzvorlage (Harzvorrat) während der Dauer der Infusion keine hohen exothermen Temperaurspitzen entwickeln dürfen.

## Lösung

Überraschend wurde gefunden, dass die erfindungsgemäße Epoxidharz-Zusammensetzung in einem breiten Bereich so eingestellt werden kann, dass sie die Anforderungen an eine längere Verarbeitungszeit erfüllt, so können zum Beispiel die Zeit bis zum Erreichen kritischer Temperaturen im Harzvorrat um 40 % und die Zeit bis zum Erreichen der Viskositätsgrenze von 1000 mPas um 12 % erhöht werden. Die Aushärtung bei 70°C liefert Glasübergangstemperaturen $\geq$ 70°C mit Umsätzen $\geq$ 95 %, was den Anforderungen, z.B. nach GL (Germanischer Lloyd) für Rotorblätter entspricht.

Die erfindungsgemäße Epoxidharz-Zusammensetzung für effiziente Flüssigimprägnierprozesse zur Herstellung dreidimensionaler Bauteile weist die folgenden vorteilhaften Eigenschaften auf:

- niedrig viskos
- den erforderlichen Fließwegen entsprechend so lange niedrig viskos, bis alle Fasern fehlerfrei imprägniert sind
- nach Imprägnierung aller Fasern unter den gewählten Bedingungen durchhärtend, um die erforderliche Produktivität zu gewährleisten
- keine exothermen Temperaturspitzen entwickelnd, welche zu beginnender Zersetzung des Harzsystems und/oder Rissbildung infolge Spannungsaufbau im Composite führen können
- sie erfüllen alle Anforderungen an die mechanische, thermische und Medien-Beständigkeit und weisen gute Oberflächeneigenschaften auf.

Gegenstand der Erfindung ist eine Epoxidharz-Zusammensetzung enthaltend:

A) mindestens eine Epoxidverbindung
und
B) eine Härterzusammensetzung bestehend aus:

B1) 5-65 Gew.-% mindestens einem Polyamin auf Basis von Triacetondiamin und

B2) 35-95 Gew.-% mindestens eines weiteren Diamins und/oder Polyamins ausgewählt aus Isophorondiamin,

4,4'-Diaminodicyclohexylmethan, 2,4'-Diaminodicyclohexylmethan, 2,2'-Diaminodicyclohexylmethan (PACM), allein oder in Mischungen der Isomeren,

Oxyalkylenpolyamine ausgewählt aus Polyoxypropylendiamin und/oder Polyoxypropylentriamin,

Addukthärtern auf Basis der Umsetzungsprodukte von Epoxidverbindungen und den vorgenannten Aminen B2) oder

Kombination von vorgenannten Aminen B2),

wobei das stöchiometrische Verhältnis der Epoxid-Gruppen von A) und der Anzahl der aktiven Wasserstoffatome der funktionellen Gruppen von B) von 1:0,5 bis 1:1,1 variiert, bevorzugt 1:0,6 bis 1:1,05, besonders bevorzugt 1: 0,95 bis 1:1,05;

C) gegebenenfalls mindestens einen Härtungsbeschleuniger,

wobei sich die Mengen von A)-C) zu 100 Gew.-% addieren,

D) gegebenenfalls weitere Zusatzstoffe.

**Komponente A)**

Als Komponente A) sind Epoxidverbindungen geeignet. Geeignete Epoxidverbindungen werden z. B. in EP 675 185 beschrieben.

Es kommt eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen und ähnliche. Vorzugsweise handelt es sich dabei um Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500, insbesondere jedoch zwischen 150 und 250 g/val, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, werden flüssige Diglycidylether auf Basis von Bisphenol A und Bisphenol F mit einem Epoxidäquivalentgewicht von 150 bis 200 g/val eingesetzt.

Es können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diäthylenglykoldiglycidylether, Dipropylenglykoldiglycidylether, höhere Polyoxyalkylenglykoldiglycidylether, wie z. B. höhere Polyoxyäthylenglykoldiglycidylether und Polyoxypropylenglykoldiglycidylether, Mischpolyoxyäthylen-propylenglykoldiglycidylether, Polyoxytetramethylenglykoldiglycidylether, Polyglycidylether des Glycerins, des 1,2,6-Hexantriols, Trimethylolpropans, Trimethyloläthans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxycyclohexyl)propans, Polyglycidylether des Rizinusöls, Triglycidyltris-(2-hydroxy-äthyl)-isocyanurat.

Weiterhin kommen als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen von Monoepoxiden wie z. B. Methylglycidylether, Butylglycidylether, Allylglycidylether, Äthylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12 bis C13 Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden

Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Als Epoxyverbindungen kommen dabei bevorzugt Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.

Es können auch Mischungen der genannten Epoxyverbindungen eingesetzt werden. Als Epoxykomponente werden besonders bevorzugt Polyepoxide auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester. Erfindungsgemäß können bevorzugt auch Mischungen dieser Epoxyverbindungen als Komponente A) eingesetzt werden.

Die Menge der Komponente A) richtet sich nach der Zusammensetzung der Komponente B) und wird so berechnet, dass das stöchiometrische Verhältnis der Epoxid-Gruppen von A) und der Anzahl der aktiven Wasserstoffatome der funktionellen Gruppen von B) variiert 1 : 0,5 bis 1 : 1,1 bevorzugt 1 : 0,6 bis 1 : 1,05, besonders bevorzugt 1 : 0,95 bis 1 : 1,05. Das bedeutet, dass pro Wasserstoffatom der Aminogruppe aus B) eine Epoxidgruppe aus A) zur Reaktion kommt.

## Komponente B1)

Polyamine auf Basis von Triacetondiamin B1) sind der Literatur generell bekannt. Als Komponente B1) werden bevorzugt die folgenden Amine auf Basis von Triacetondiamin eingesetzt: 2,2,6,6-Tetramethyl-4-amino-piperidin (TAD), Hexamethylen-Bis-(4-Amino-2,2,6,6-tetramethylpiperidin), N-Butyl-4-Amino-2,2,6,6-tetramethylpiperidin, N,N-Dimethylaminopropyl-4-Amino-2,2,6,6-tetramethylpiperidin, N-Propyl-4-Amino-2,2,6,6-tetramethylpiperidin, N-Isopropyl-4-Amino-2,2,6,6-tetramethylpiperidin, N-Hydroxyethyl-4-Amino-2,2,6,6-tetramethylpiperidin, N-Methoxyethyl-4-Amino-2,2,6,6-tetramethylpiperidin, N-Methoxyethyl-4-Amino-2,2,6,6-tetramethylpiperidin, N',N'-Dimethylaminoethyl-4-Amino-2,2,6,6-tetramethylpiperidin, N-Morpholinoethyl-4-Amino-2,2,6,6-tetramethylpiperidin, N-Piperazinoethyl-4-Amino-2,2,6,6-tetramethylpiperidin, 4-Morpholino-2,2,6,6-tetramethylpiperidin.

Es können auch Mischungen der vorab genannten Amine auf Basis von Triacetondiamin B1) eingesetzt werden.

Bevorzugt werden 2,2,6,6-Tetramethyl-4-amino-piperidin (TAD) und/oder Hexamethylen-Bis-(4-Amino-2,2,6,6-tetramethylpiperidin) eingesetzt.

Die eingesetzte Menge der Komponente B1) beträgt allgemein 5 - 65 Gew.-%, bevorzugt 25 - 55 Gew.-%, besonders bevorzugt 35 - 45 Gew.-%, bezogen auf die Gesamtmenge aus B1) und B2).

## Komponente B2)

Als Verbindungen B2) sind prinzipiell solche Diamine und Polyamine geeignet, die mindestens 2 Aminogruppen enthalten. Diamine und Polyamine können auch in Mischungen mit Aminoalkoholen oder Polymercaptanen eingesetzt werden.

Di- oder Polyamine B2) sind in der Literatur bekannt. Diese können monomere, oligomere und/oder polymere Verbindungen sein. Monomere und oligomere Verbindungen sind bevorzugt ausgewählt aus der Gruppe Diamine, Triamine, Tetramine. Die Amingruppe der Di- oder Polyamine B2) kann an einem primären, sekundären oder tertiären Kohlenstoffatom angebunden sein, bevorzugt an einem primären oder sekundären Kohlenstoffatom.

Eingesetzt werden Diamine als Komponente B2) ausgewählt aus Isophorondiamin (3,5,5-Trimethyl-3-aminomethyl-cyclohexylamin, IPD), 4,4'-Diaminodicyclohexylmethan, 2,4'-Diaminodicyclohexylmethan, 2,2'-Diaminodicyclohexylmethan (auch als PACM bezeichnet) allein oder in Mischungen der Isomeren, Oxyalkylenpolyamine ausgewählt aus Polyoxypropylendiamin und Polyoxypropylentriamin, Addukthärtern auf Basis der Umsetzungsprodukte von Epoxidverbindungen und den vorgenannten Aminen B2) oder Kombination von vorgenannten Aminen B2). Es können auch Mischungen dieser Verbindungen eingesetzt werden.

Ganz besonders bevorzugt wird als B2)

a) Isophorondiamin (3,5,5-Trimethyl-3-aminomethyl-cyclohexylamin, IPD),
b) und/oder eine Kombination aus Isophorondiamin und Polyoxypropylendiamin und/oder Polyoxypropylentriamin,
c) und/oder Addukthärter auf Basis der Umsetzungsprodukte von Epoxidverbindungen und den vorgenannten Aminen B2) oder Kombination von vorgenannten Aminen B2) eingesetzt.

Das Mengenverhältnis der Komponenten in b), Isophorondiamin : Polyoxypropylenpolyamin und/oder Polyoxypropylentriamin beträgt im allgemeinen 10:90 bis 90:10 Gew.-%, und bevorzugt 20:80 bis 40:60 Gew.-%.

Erfindungsgemäß können Aminoalkohole als weitere Komponente zu den Diaminen und Polyaminen in Mischungen in der Komponente B2) eingesetzt werden. Als Aminoalkohole seien beispielhaft Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol Isophoronaminoalkohol und Diisopropanolamin genannt. Aminoalkohole können allein oder als Mischungen mehrerer Aminoalkohole zusammen mit Di- und Polyaminen als Komponente B2) eingesetzt werden.

Erfindungsgemäß können auch Polymercaptane als weitere Komponente zu den Diaminen und Polyaminen in Mischungen in der Komponente B2) eingesetzt werden. Als Mercaptane, auch Thiole genannt, seien bspw. Ethanthiol, Dithiothreitol, Dithioerythritol, Glyceryldithioglykolat, Glykoldimercaptoacetat, Trimethylolpropantrimercaptoacetat, Pentaerythritoltetramercaptoacetate, Glykoldi(3-mercaptopropionat), Trimethylolpropantri(3-mercaptopropionat), Pentaerythritoltetra(3-mercaptopropionat), Dipentaerythritolhexa(3-mercaptopropionat), Ethoxyliertes-Trimethylolpropantri(3-mercaptopropionat) (Produktname: Thiocure ETTMP 1300), Tris[2-(3-mercaptopropionyloxy)ethyl]isocyanurat genannt. Weitere Mercaptane werden bspw. in EP394495A1, US4775733A1 und WO2007096425A2 beschrieben. Mercaptane können allein oder als Mischungen mehrerer Mercaptane zusammen mit Di- und Polyaminen als Komponente B2) eingesetzt werden.

Zusätzlich zu den genannten Di- und Polyaminen können die Di- und Polyamine zusammen mit Polyphenolen als Komponente B2) eingesetzt werden. Beispiele dafür werden in **"Epoxy Resins - Chemistry and Technology; Curing Agents and Modifiers; S. 481-482, 2. Ausgabe 1988"** genannt. Polyphenole können allein oder als Mischungen mehrerer Polyphenole zusammen mit Di- und Polyaminen als Komponente B2) eingesetzt werden.

Die eingesetzte Menge der Komponente B2) beträgt allgemein 35 - 95 Gew.-%, bevorzugt 45 - 75 Gew.-%, besonders bevorzugt 55 - 65 Gew.-%, bezogen auf die Gesamtmenge aus B1) und B2).

## Komponente C) Härtungsbeschleuniger

Weiterhin können gegebenenfalls Katalysatoren für die Epoxy-Amin-Reaktion zugegeben werden. Geeignete Beschleuniger sind beschrieben in: H. Lee and K. Neville, Handbook of Epoxy Resins, McGraw-Hill, New York, 1967. Erfindungsgemäß werden 0,1 bis 10 Gew.-%,, bevorzugt 0,1 bis 5 Gew.-%, besonders bevorzugt 0,5 bis 2,0 Gew.-% mindestens eines Härtungsbeschleunigers eingesetzt.

Beispiele für geeignete Beschleuniger sind organische Säuren wie Salicylsäure, Dihydroxybenzoesäure, Trihydroxybenzoesäure, Methylsalicylsäure, 2-Hydroxy-3-isopropylbenzoesäure oder Hydroxynaphthoesäuren, Milchsäure und Glycolsäure, tertiäre Amine wie Benzyldimethylamin (BDMA), 1,4-Diazabicyclo[2,2,2]octan (DABCO), Triethylamin, N,N'-Dimethylpiperazin oder Aminoethylpiperazin (AEP), Hydroxylamine wie Dimethylaminomethylphenol, Bis(dimethylaminomethyl)phenol, 2,4,6-Tris(dimethylaminomethyl)phenol (Ancamine K54), Urone wie 3-(4-Chlorphenyl)-1,1-dimethylharnstoff (Monuron), 3-(3,4-Dichlorphenyl)-1,1-dimethyl-harnstoff (Diuron), 3-Phenyl-1,1-dimethylharnstoff (Fenuron), 3-(3-Chlor-4-methylphenyl)-1,1-dimethyl-harnstoff (Chlortoluron), Tetraalkylguanidine wie N,N,N',N'-Tetramethylguanidin (TMG), Imidazol und -derivate wie 1H-Imidazol, 1-Methylimidazol, 2-Methylimidazol, 1-Benzyl-2-methylimidazol, 2-Ethyl-4-methylimidazol, 2-Phenylimidazol, 2-Phenyl-4-methylimidazol, 1-Vinylimidazol, 1-(2-Hydroxyethyl)imidazol, 1,2-Dimethylimidazol, 1-Cyanoethylimidazol und deren geeignete Salze, Phenol und -derivate wie t-Butylphenol, Nonylphenol, Bisphenol-A oder Bisphenol-F sowie organische oder anorganische Salze und Komplexverbindungen wie Methyltriphenylphosphoniumbromid, Calciumnitrat (Accelerator 3130), oder Mg-, Ca-, Zn- und Sn-Carboxylate, -sulfonate, -phosphonate, -sulfate, - tetrafluoroborate, oder -nitrate. Besonders bevorzugt ist die Gruppe der tertiären Amine.

## Komponente D) Zusatzstoffe

Die erfindungsgemäße Zusammensetzung kann gegebenenfalls Zusatzstoffe enthalten. Unter Zusatzstoffen werden Stoffe verstanden, die in der Regel zugesetzt werden, um die Eigenschaften der Epoxidzusammensetzung in gewünschter Richtung zu verändern, z. B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Geeignete Zusatzstoffe werden z.B. in WO 99/55772, S. 15-25, und in **"Plastics Additives; R. Gächter und H. Müller, Hanser Publishers 1983"** beschrieben. Diese können der Komponente A) oder B) zugegeben werden.

So können beispielsweise Lichtschutzmittel wie z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden.

Für die Herstellung der erfindungsgemäßen reaktiven Zusammensetzungen können darüber hinaus Zusatzstoffe wie Verlaufsmittel, z. B. Polysilicone oder Haftvermittler, z. B. auf Acrylatbasis, zugesetzt werden. Zusätzlich können noch weitere Komponenten optional enthalten sein.

Als Hilfs- und Zusatzstoffe können zusätzlich Regler, Weichmacher, Stabilisatoren und/oder Inhibitoren eingesetzt werden.

Darüber hinaus können Farbstoffe, nanoskalige Füllstoffe, Toughener (Zähigkeitsverbesserer), Trennmittel, Flammschutzmittel, Pigmente, Trockenmittel, Netz-, Dispergier- und Verlaufshilfsmittel, Haftvermittler, UV-Stabilisatoren, Entschäumer und Rheologieadditive zugesetzt werden.

Gegenstand der Erfindung ist auch die Verwendung einer Epoxidharz-Zusammensetzung enthaltend:

A) mindestens eine Epoxidverbindung
und

B) eine Härterzusammensetzung bestehend aus:

B1) 5-65 Gew.-% mindestens einem Polyamin auf Basis von Triacetondiamin und
B2) 35-95 Gew.-% mindestens eines weiteren Diamins und/oder Polyamins ausgewählt aus Isophorondiamin,
4,4'-Diaminodicyclohexylmethan, 2,4'-Diaminodicyclohexylmethan, 2,2'-Diaminodicyclohexylmethan (PACM), allein oder in Mischungen der Isomeren, Oxyalkylenpolyamine ausgewählt aus Polyoxypropylendiamin und/oder Polyoxypropylentriamin,
Addukthärtern auf Basis der Umsetzungsprodukte von Epoxidverbindungen und den vorgenannten Aminen B2) oder
Kombination von vorgenannten Aminen B2),

wobei das stöchiometrische Verhältnis der Epoxid-Gruppen von A) und der Anzahl der aktiven Wasserstoffatome der funktionellen Gruppen von B) von 1 : 0,5 bis 1:1,1 variiert, bevorzugt 1 : 0,6 bis 1 : 1,05, besonders bevorzugt 1 : 0,95 bis 1 : 1,05;

C) gegebenenfalls mindesten einen Härtungsbeschleuniger,
wobei sich die Mengen von A) - C) zu 100 Gew.-% addieren,

D) gegebenenfalls weitere Zusatzstoffe;

zur Herstellung von Composites.

Gegenstand der Erfindung sind auch Composites-Bauteile,
im Wesentlichen aufgebaut aus

1) mindestens einem faserförmigen Träger und gegebenenfalls Kernwerkstoffen und
2) einer Epoxidharz-Zusammensetzung enthaltend:

A) mindestens eine Epoxidverbindung
und
B) eine Härterzusammensetzung bestehend aus:

B1) 5 - 65 Gew.-% mindestens einem Polyamin auf Basis von Triacetondiamin und
B2) 35 - 95 Gew.-% mindestens eines weiteren Diamins und/oder Polyamins ausgewählt aus Isophorondiamin,
4,4'-Diaminodicyclohexylmethan, 2,4'-Diaminodicyclohexylmethan, 2,2'-Diaminodicyclohexylmethan (PACM), allein oder in Mischungen der Isomeren, Oxyalkylenpolyamine ausgewählt aus Polyoxypropylendiamin und/oder Polyoxypropylentriamin,
Addukthärtern auf Basis der Umsetzungsprodukte von Epoxidverbindungen und den vorgenannten Aminen B2) oder

Kombination von vorgenannten Aminen B2), wobei das stöchiometrische Verhältnis der Epoxid-Gruppen von A) und der Anzahl der aktiven Wasserstoffatome der funktionellen Gruppen von B) von 1 : 0,5 bis 1 : 1,1 variiert, bevorzugt 1 : 0,6 bis 1 : 1,05 beträgt, besonders bevorzugt 1 : 0,95 bis 1 : 1,05;

C) gegebenenfalls mindestens einen Härtungsbeschleuniger,
wobei sich die Mengen von A) - C) zu 100 Gew.-% addieren,
D) gegebenenfalls weitere Zusatzstoffe.

## Faserförmiger Träger

Das bevorzugt erfindungsgemäß verwendete faserförmige Trägermaterial ist dadurch gekennzeichnet, dass die faserförmigen Träger größtenteils aus Glas, Kohlenstoff, Kunststoffen wie Polyamid (Aramid) oder Polyester, Naturfasern, oder mineralischen Fasermaterialien wie Basaltfasern oder keramische Fasern bestehen, einzeln oder aus Mischungen, oder aus mehreren Lagen verschiedener Fasertypen.

Die faserförmigen Träger liegen als textile Flächengebilde aus Vlies, Maschenware, Gewirke oder Gestricke, nicht maschige Gebinde wie Gewebe, Gelege oder Geflechte, als Langfaser- oder Kurzfasermaterialien vor, einzeln oder aus mehreren Lagen verschiedener Typen.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff und Glasfasern, können verwendet werden.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser- Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

## Kernwerkstoffe

Geeignete Kernwerkstoffe sind z.B.: Wabenstrukturen auf der Basis von getränktem Papier, Aramidfasern oder Leichtmetallen z.B. Aluminium, Schäume auf der Basis von Leichtmetallen oder thermoplastischen oder duromeren Polymerwerkstoffen wie Polyurethanen, Polyolefinen, Polystyrol, Polymethacrylimid (PMI) z:B. Rohacell®, Phenolharzen oder Cyanatharzen sowie Holzwerkstoffen, z.B. Balsa-Holz.

Gegenstand der Erfindung ist auch ein Verfahren zur Herstellung von Composites durch die Verfahrensschritte:

I. Bereitstellung einer Zusammensetzung enthaltend

A) mindestens eine Epoxidverbindung

und

B) eine Härterzusammensetzung bestehend aus:

B1) 5 - 65 Gew.-% mindestens einem Polyamin auf Basis von Triacetondiamin und
B2) 35 - 95 Gew.-% mindestens eines weiteren Diamins und/oder Polyamins ausgewählt aus Isophorondiamin,
4,4'-Diaminodicyclohexylmethan, 2,4'-Diaminodicyclohexylmethan, 2,2'-Diaminodicyclohexylmethan (PACM), allein oder in Mischungen der Isomeren, Oxyalkylenpolyamine ausgewählt aus Polyoxypropylendiamin und/oder Polyoxypropylentriamin,
Addukthärtern auf Basis der Umsetzungsprodukte von Epoxidverbindungen und den vorgenannten Aminen B2) oder
Kombination von vorgenannten Aminen B2),

wobei das stöchiometrische Verhältnis der Epoxid-Gruppen von A) und der Anzahl der aktiven Wasserstoffatome der funktionellen Gruppen von B) von **1** : 0,5 bis 1 : 1,1 variiert, bevorzugt 1 : 0,6 bis **1** : 1,05, besonders bevorzugt **1** : 0,95 bis 1 : 1,05;

C) gegebenenfalls mindestens einen Härtungsbeschleuniger,
wobei sich die Mengen von A) - C) zu 100 Gew.-% addieren,

D) gegebenenfalls weitere Zusatzstoffe;

II. Imprägnierung eines Aufbaus aus faserförmigen Trägern und ggf. weiteren Kernwerkstoffen mit der Zusammensetzung aus I. in einer Form oder in einem Werkzeug nach einem Flüssigharz-Imprägnierverfahren oder Imprägnierung von faserförmigen Trägern und Wickeln auf einen Dorn,

III. Aushärtung der reaktiven Zusammensetzung zum Composite-Bauteil und

IV. entformen des fertigen Bauteils aus der Form.

Gegenstand der Erfindung ist insbesondere auch die Verwendung der erfindungsgemäß hergestellten Composites im Boots- und Schiffbau, in der Luft- und Raumfahrtechnik, im Automobilbau, für Zweiräder, bevorzugt Motorräder und Fahrräder, in den Bereichen Automotive, Construction (z.B. Rohre), Behälterbau, Medizintechnik, Sport, Elektro- und Elektronik-Industrie, und insbesondere Energieerzeugungsanlagen, wie Windkraftanlagen.
Insbesondere sind die erfindungsgemäßen Epoxid-Zusammensetzungen geeignet zur Herstellung von Rotorblättern von Windkraftanlagen.

Beispiele

Die in den folgenden Beispielen genutzten Einsatzstoffe sind in Tabelle **1** erklärt.

*Tabelle 1*.: Einsatzstoffe

| Handelsname | Lieferant | Chemische Bezeichnung | Abkürzung |
|---|---|---|---|
| Triacetondiamin | Evonik Industries | 2,2,6,6-Tetramethyl-4-amino-piperidin | TAD |
| VESTAMIN® IPD | Evonik Industries | 3-Aminomethyl-3,5,5-trimethylcyclohexylamin | IPD |
| Jeffamine® D230 | Huntsman | Polyoxypropylendiamin | D230 |
| D.E.R. ® 351 | Dow Chemical | Epoxidharz aus Bisphenol A/Bisphenol F und Epichlorhydrin | - |
| D.E.R. ® 731 | Dow Chemical | Butandioldiglycidylether | - |

Beschreibung der in den folgenden Beispielen benutzten Analyse-Verfahren:

**Viskositätsanstieg, isotherm**

| | |
|---|---|
| Gerät: | Rheotec Rheometer RC 30 |
| Messsystem: | EWS30-CC25 DIN/FTK mit Becher MB30-CC25 DIN/FTK |
| Einsatzmenge: | 16 g |
| Temperierung: | Kälte-Umwälzthermostat Julabo F33-ME |

**Temperaturanstieg von Harz/Härterformulierungen**

| | |
|---|---|
| Gerät: | 3-Kanal-$\mu$P-Schreiber 4153 der Firma Yokogawa |
| Thermoelemente: | NiCr-Ni -200°C bis 1370°C |
| Einsatzmenge: | 900 g |
| Temperierung: | Kälte-Umwälzthermostat Julabo F33-ME |
| Durchführung: | das Thermoelement wird mittig ca. 1,5 cm vom Boden entfernt im Ansatz platziert. Der Temperaturverlauf wird als Temperatur-Zeitkurve aufgezeichnet. |

**DSC**

| | |
|---|---|
| Gerät: | Mettler DSC 1 |
| Parameter: | Temperatur -30 bis +250 °C, Aufheizrate 10 K/ min |
| Bestimmung der Glasübergangstemperatur (Tg): | Halbstufenmethode, MittelpunktDIN 51007 |

Bestimmung des Umsatzes:

$$100 - \left( \frac{exothermer\ Wärmestrom\ nach\ Härtung \times 100}{exothermer\ Wärmestrom\ vor\ Härtung} \right)$$

**Beispiel 1:**

In einem passenden Rührgefäß wurde ein Ansatz aus 50 g VESTAMIN® IPD, 100 g Triacetondiamin, 100 g Jeffamine® D230, 730 g D.E.R. 351 und 80 g D.E.R. 731 zubereitet und in einem Speedmixer Modell DAC 600.1 VAC-P der Fa. Hauschild bei 1200-1800 U/min innig vermischt. Im Folgenden wurde der Viskositätsanstieg dieser Epoxidharz-Zusammensetzung bei 30°C isotherm mit dem Rheometer RC30 der Firma Rheotec bestimmt.
Weiterhin wurde der Temperaturanstieg bei 23 °C bestimmt.
Weiterhin wurde ein Härtungsscreening durchgeführt. Dafür wurden 5 g der Epoxidharz-Zusammensetzung in ein Aluminiumpfännchen (Durchmesser 50 mm) eingewogen und die Probe 6 h im Umlufttrockenschrank bei 70 °C gehärtet. Anschließende wurden Umsatz und Tg per DSC (Maschine Mettler DSC 1) bestimmt. Die Aufheizrate betrug 10 K/min von - 30 bis 250 °C. Alle Ergebnisse sind in Tabelle 2 dargestellt.

**Beispiel 2** (nicht erfindungsgemäß)

In gleicher Weise wie bei Beispiel 1 wurde ein Ansatz aus 75 g VESTAMIN® IPD, 175 g Jeffamine® D230, 718 g D.E.R. 351 und 80 g D.E.R. 731 in einem passenden Rührgefäß zubereitet und in einem Speedmixer Modell DAC 600.1 VAC-P der Fa. Hauschild bei 1200 - 1800 U/min innig vermischt. Mit dieser Epoxidharz-Zusammensetzung wurden in gleicher Weise wie in Beispiel 1 Experimente zum Viskositätsanstieg bei 30 °C, zum Temperaturanstieg bei 23 °C sowie ein Härtungsscreening durchgeführt. Diese Formulierung zeigt zwar eine gute Tg-Entwicklung, erreicht Viskositäten von 1000 mPas bei 30 °C jedoch schneller und hat damit ein kleineres Prozessfenster. Auch werden kritische Temperaturen im Harzvorrat deutlich schneller erreicht, was zu einem vorzeitigen Abbruch des Imprägnierprozesses führen würde. Auch diese Ergebnisse sind in Tabelle 2 dargestellt.

**Beispiel 3** (nicht erfindungsgemäß)

In gleicher Weise wie bei Beispiel 1 wurde ein Ansatz aus 250 g Triacetondiamin, 720 g D.E.R. 351 und 80 g D.E.R. 731 in einem passenden Rührgefäß zubereitet und in einem Speedmixer Modell DAC 600.1 VAC-P der Fa. Hauschild bei 1200 - 1800 U/min innig vermischt. Mit dieser Epoxidharz-Zusammensetzung wurden in gleicher Weise wie in Beispiel 1 Experimente zum Viskositätsanstieg bei 30 °C, zum Temperaturanstieg bei 23 °C sowie ein Härtungsscreening durchgeführt. Diese Formulierung zeigt zwar ein sehr breites Prozessfenster (1000 mPas werden erst nach 4 h bei 30 °C erreicht) und höhere Temperaturen im Harzvorrat treten überhaupt nicht zutage. Die Tg-Entwicklung unter den Bedingungen einer Härtung bei 70 °C ist jedoch vollkommen ungenügend, so dass eine rein TAD-basierte Härterzusammensetzung keine anforderungsgerechten Fertigteile liefert. Auch diese Ergebnisse sind in Tabelle 2 dargestellt.

*Tabelle 2:*

|  | Beispiel 1 | Beispiel 2 (nicht erfindungsgemäß) | Beispiel 3 (nicht erfindungsgemäß) |
|---|---|---|---|
| **Viskositätsanstieg @ 30 °C:** |  |  |  |
| Ausgangsviskosität | 173 mPas | 189 mPas | 174 mPas |
| Zeit bis 1000 mPas | 202 min | 180 min | 242 min |
| **Temperaturanstieg @ 23 °C,** 900 g-Ansatz |  |  |  |
| Zeit bis 60 °C | 240 min | 170 min | --- nicht erreicht |
| **Härtungsscreening:** |  |  |  |
| Umsatz nach 6 h bei 70 °C | 96 % | 97 % | 90 % |
| Glasübergangstemperatur | 75°C | 71°C | 50°C |

## Patentansprüche

1. Epoxidharz-Zusammensetzung enthaltend:

   A) mindestens eine Epoxidverbindung
   und
   B) eine Härterzusammensetzung bestehend aus:

   B1) 5 - 65 Gew.-% mindestens eines Polyamins auf Basis von Triacetondiamin und
   B2) 35 - 95 Gew.-% mindestens eines weiteren Diamins und/oder Polyamins
   ausgewählt aus
   Isophorondiamin,
   4,4'-Diaminodicyclohexylmethan, 2,4'-Diaminodicyclohexylmethan, 2,2'-Diaminodicyclohexylmethan (PACM), allein oder in Mischungen der Isomeren, Oxyalkylenpolyamine ausgewählt aus Polyoxypropylendiamin und/oder Polyoxypropylentriamin,
   Addukthärtern auf Basis der Umsetzungsprodukte von Epoxidverbindungen und den vorgenannten Aminen B2) oder
   Kombination von vorgenannten Aminen B2),

   wobei das stöchiometrische Verhältnis der Epoxid-Gruppen von A) und der Anzahl der aktiven Wasserstoffatome der funktionellen Gruppen von B) von 1 : 0,5 bis 1:1,1 variiert, bevorzugt 1 : 0,6 bis 1:1,05, besonders bevorzugt 1 : 0,95 bis 1 : 1,05;
   C) gegebenenfalls mindestens einen Härtungsbeschleuniger,
   wobei sich die Mengen von A) - C) zu 100 Gew.-% addieren,
   D) gegebenenfalls weitere Zusatzstoffe.

2. Epoxidharz-Zusammensetzung nach Anspruch 1, **dadurch gekennzeichnet, dass** Epoxyverbindungen A) auswählt aus gesättigten, ungesättigten, aliphatischen, cycloaliphatischen, aromatischen, oder heterocyclisch Epoxyverbindungen, enthalten sind, und diese auch Hydroxylgruppen aufweisen können.

3. Epoxidharz-Zusammensetzung nach mindestens einem der vorherigen Ansprüche,
   **dadurch gekennzeichnet, dass** Epoxyverbindungen A) ausgewählt aus_Glycidylethern, Glycidylestern, aliphatischen Epoxiden, Diglycidylethern auf Basis Bisphenol A und/oder Bisphenol F, Glycidylmethacrylaten, enthalten sind.

4. Epoxidharz-Zusammensetzung nach mindestens einem der vorherigen Ansprüche,
**dadurch gekennzeichnet, dass** Epoxyverbindungen A) ausgewählt aus der Gruppe umfassend Epoxidharze auf Basis von Bisphenol A-diglycidylether, Epoxidharze auf Basis von Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether, Hexahydrophthalsäurediglycidylester, aliphatische oder cycloaliphatische Epoxidharz-Typen, enthalten sind.

5. Epoxidharz-Zusammensetzung nach mindestens einem der vorherigen Ansprüche,
**dadurch gekennzeichnet, dass** Polyamine auf Basis von Triacetondiamin B1) ausgewählt aus 2,2,6,6-Tetramethyl-4-amino-piperidin (TAD), Hexamethylen-Bis-(4-Amino-2,2,6,6-tetramethylpiperidin), N-Butyl-4-Amino-2,2,6,6-tetramethylpiperidin, N,N-Dimethylaminopropyl-4-Amino-2,2,6,6-tetramethylpiperidin, N-Propyl-4-Amino-2,2,6,6-tetramethylpiperidin, N-Isopropyl-4-Amino-2,2,6,6-tetramethylpiperidin, N-Hydroxyethyl-4-Amino-2,2,6,6-tetramethylpiperidin, N-Methoxyethyl-4-Amino-2,2,6,6-tetramethylpiperidin, N-Methoxyethyl-4-Amino-2,2,6,6-tetramethylpiperidin, N',N'-Dimethylaminoethyl-4-Amino-2,2,6,6-tetramethylpiperidin, N-Morpholinoethyl-4-Amino-2,2,6,6-tetramethylpiperidin, N-Piperazinoethyl-4-Amino-2,2,6,6-tetramethylpiperidin, 4-Morpholino-2,2,6,6-tetramethylpiperidin, enthalten sind.

6. Epoxidharz-Zusammensetzung nach mindestens einem der vorherigen Ansprüche,
**dadurch gekennzeichnet, dass** als Komponente B2)

   a) Isophorondiamin,
   b) und/oder eine Kombination aus Isophorondiamin und Polyoxypropylendiamin und/oder Polyoxypropylentriamin,
   c) und/oder Addukthärter auf Basis der Umsetzungsprodukte von Epoxidverbindungen und den vorgenannten Aminen B2) oder Kombination von vorgenannten Aminen B2),

   eingesetzt werden.

7. Epoxidharz-Zusammensetzung nach mindestens einem der vorherigen Ansprüche,
**dadurch gekennzeichnet, dass** als Härtungsbeschleuniger C) tertiäre Amine enthalten sind.

8. Verwendung einer Epoxidharz-Zusammensetzung nach mindestens einem der vorherigen Ansprüche zur Herstellung von Composites.

9. Composites-Bauteile,
im Wesentlichen aufgebaut aus

   1) mindestens einem faserförmigen Träger und gegebenenfalls Kernwerkstoffen und
   2) einer Epoxidharz-Zusammensetzung nach mindestens einem der vorherigen Ansprüche 1 bis 7.

10. Verfahren zur Herstellung von Composites nach Anspruch 9 durch die Verfahrensschritte:

    I. Bereitstellung einer Zusammensetzung nach Anspruch 1 ;.
    II. Imprägnierung eines Aufbaus aus faserförmigen Trägern und ggf. weiteren Kernwerkstoffen mit der Zusammensetzung aus I. in einer Form oder in einem Werkzeug nach einem Flüssigharz-Imprägnierverfahren oder Imprägnierung von faserförmigen Trägern und Wickeln auf einen Dorn,
    III. Aushärtung der reaktiven Zusammensetzung zum Composite-Bauteil und
    IV. Entformen des fertigen Bauteils aus der Form.

11. Verwendung der Composites nach Anspruch 9 im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen.

12. Verwendung der Composites nach Anspruch 9 zur Herstellung von Rotorblättern von Windkraftanlagen.

**Claims**

1. Epoxy resin composition comprising:

   A) at least one epoxy compound
   and
   B) a hardener composition consisting of:

   B1) 5%-65% by weight of at least one polyamine based on triacetonediamine
   and
   B2) 35%-95% by weight of at least one further diamine and/or polyamine selected from isophoronediamine, 4,4'-diaminodicyclohexylmethane, 2,4'-diaminodicyclohexylmethane, 2,2'-diaminodicyclohexylmethane (PACM), alone or in mixtures of the isomers, oxyalkylenepolyamines selected from polyoxypropylenediamine and/or
   polyoxypropylenetriamine, adduct hardeners based on the reaction products of epoxy compounds and the aforementioned amines B2) or combination of aforementioned amines B2),

   where the stoichiometric ratio of the epoxy groups of A) and the number of active hydrogen atoms of the functional groups of B) varies from 1:0.5 to 1:1.1, preferably 1:0.6 to 1:1.05, more preferably 1:0.95 to 1:1.05,
   C) optionally at least one hardening accelerator, where the amounts of A)-C) add up to 100% by weight,
   D) optionally further additives.

2. Epoxy resin composition according to Claim 1, **characterized in that** epoxy compounds A) selected from saturated, unsaturated, aliphatic, cycloaliphatic, aromatic and heterocyclic epoxy compounds are present, and these may also have hydroxyl groups.

3. Epoxy resin composition according to at least one of the preceding claims, **characterized in that** epoxy compounds A) selected from glycidyl ethers, glycidyl esters, aliphatic epoxides, diglycidyl ethers based on bisphenol A and/or bisphenol F, glycidyl methacrylates are present.

4. Epoxy resin composition according to at least one of the preceding claims, **characterized in that**, **characterized in that** the epoxy compounds A) selected from the group comprising epoxy resins based on bisphenol A diglycidyl ether, epoxy resins based on bisphenol F diglycidyl ether, 4,4'-methylenebis[N,N-bis(2,3-epoxypropyl)aniline], hexanediol diglycidyl ether, butanediol diglycidyl ether, trimethylolpropane triglycidyl ether, propane-1,2,3-triol triglycidyl ether, pentaerythritol tetraglycidyl ether, diglycidyl hexahydrophthalate, aliphatic or cycloaliphatic epoxy resin types are present.

5. Epoxy resin composition according to at least one of the preceding claims, **characterized in that** polyamines based on triacetonediamine B1) selected from 2,2,6,6-tetramethyl-4-aminopiperidine (TAD), hexamethylenebis(4-amino-2,2,6,6-tetramethylpiperidine), N-butyl-4-amino-2,2,6,6-tetramethylpiperidine, N,N-dimethylaminopropyl-4-amino-2,2,6,6-tetramethylpiperidine, N-propyl-4-amino-2,2,6,6-tetramethylpiperidine, N-isopropyl-4-amino-2,2,6,6-tetramethylpiperidine, N-hydroxyethyl-4-amino-2,2,6,6-tetramethylpiperidine, N-methoxyethyl-4-amino-2,2,6,6-tetramethylpiperidine, N-methoxyethyl-4-amino-2,2,6,6-tetramethylpiperidine, N', N'-dimethylaminoethyl-4-amino-2,2,6,6-tetramethylpiperidine, N-morpholinoethyl-4-amino-2,2,6,6-tetramethylpiperidine, N-piperazinoethyl-4-amino-2,2,6,6-tetramethylpiperidine, 4-morpholino-2,2,6,6-tetramethylpiperidine are present.

6. Epoxy resin composition according to at least one of the preceding claims, **characterized in that** the following are used as component B2):

   a) isophoronediamine,
   b) and/or a combination of isophoronediamine and polyoxypropylenediamine and/or polyoxypropylenetriamine,
   c) and/or adduct hardeners based on the reaction products of epoxy compounds and the aforementioned amines B2) or combination of the aforementioned amines B2).

7. Epoxy resin composition according to at least one of the preceding claims, **characterized in that** tertiary amines are present as hardening accelerator C).

8. Use of an epoxy resin composition according to at least one of the preceding claims for production of composites.

**9.** Composite components,
formed essentially from

1) at least one fibrous carrier and optionally core materials
and
2) an epoxy resin composition according to at least one of the preceding claims 1 to 7.

**10.** Process for producing composites according to Claim 9 by the process steps of:

I. providing a composition according to Claim 1;
II. impregnating a structure composed of fibrous carriers and optionally further core materials with the composition from I. in a form or in a mould by a liquid resin impregnation method or impregnating fibrous carriers and gaps on a mandrel,
III. hardening the reactive composition to give the composite component and
IV. demoulding the finished component from the mould.

**11.** Use of the composites according to Claim 9 in boat- and shipbuilding, in aerospace technology, in automobile construction, for two-wheeled vehicles, preferably motorcycles and pedal cycles, in the automotive, construction, medical technology and sports sectors, the electrical and electronics industry, energy generation installations.

**12.** Use of the composites according to Claim 9 for production of rotor blades of wind turbines.

**Revendications**

**1.** Composition de résine époxyde, contenant :

A) au moins un composé d'époxyde
et
B) une composition de durcisseur constituée par :

B1) 5 à 65 % en poids d'au moins une polyamine à base de triacétone-diamine,
et
B2) 35 à 95 % en poids d'au moins une diamine et/ou polyamine supplémentaire, choisie parmi :

l'isophorone-diamine,
le 4,4'-diaminodicyclohexylméthane, le 2,4'-diaminodicyclohexylméthane, le 2,2'-diaminodicyclohexylméthane (PACM), seuls ou en mélanges des isomères,
les oxyalkylène-polyamines choisies parmi la polyoxypropylène-diamine et/ou la polyoxypropylènetriamine,
les durcisseurs adduits à base des produits de réaction de composés d'époxyde et des amines B2) susmentionnées, ou
une combinaison des amines B2) susmentionnées,

le rapport stoechiométrique entre les groupes époxyde de A) et le nombre d'atomes d'hydrogène actifs des groupes fonctionnels de B) variant de 1:0,5 à 1:1,1, de préférence de 1:0,6 à 1:1,05, de manière particulièrement préférée de 1:0,95 à 1:1,05,
C) éventuellement au moins un accélérateur de durcissement,
la somme des quantités de A) à C) étant de 100 % en poids,
D) éventuellement d'autres additifs.

**2.** Composition de résine époxyde selon la revendication 1, **caractérisée en ce que** des composés époxy A) choisis parmi les composés époxy saturés, insaturés, aliphatiques, cycloaliphatiques, aromatiques ou hétérocycliques sont contenus, et ceux-ci peuvent également comprendre des groupes hydroxyle.

**3.** Composition de résine époxyde selon au moins l'une quelconque des revendications précédentes, **caractérisée en ce que** des composés époxy A) choisis parmi les éthers de glycidyle, les esters de glycidyle, les époxydes aliphatiques, les éthers diglycidyliques à base de bisphénol A et/ou de bisphénol F, les méthacrylates de glycidyle,

14

sont contenus.

4. Composition de résine époxyde selon au moins l'une quelconque des revendications précédentes, **caractérisée en ce que** des composés époxy A) choisis dans le groupe comprenant les résines époxydes à base d'éther diglycidylique de bisphénol A, les résines époxydes à base d'éther diglycidylique de bisphénol F, la 4,4'-méthylène-bis[N,N-bis(2,3-époxypropyl)aniline], l'éther diglycidylique d'hexanediol, l'éther diglycidylique de butanediol, l'éther triglycidylique de triméthylolpropane, l'éther triglycidylique de 1,2,3-propanetriol, l'éther tétraglycidylique de pentaérythrite, l'ester diglycidylique de l'acide hexahydrophtalique, les résines époxydes de type aliphatique ou cycloaliphatique, sont contenus.

5. Composition de résine époxyde selon au moins l'une quelconque des revendications précédentes, **caractérisée en ce que** des polyamines à base de triacétone-diamine B1) choisies parmi la 2,2,6,6-tétraméthyl-4-amino-pipéridine (TAD), l'hexaméthylène-bis-(4-amino-2, 2, 6, 6-tétraméthylpipéridine), la N-butyl-4-amino-2,2,6,6-tétraméthylpipéridine, la N,N-diméthylaminopropyl-4-amino-2,2,6,6-tétraméthylpipéridine, la N-propyl-4-amino-2,2,6,6-tétraméthylpipéridine, la N-isopropyl-4-amino-2,2,6,6-tétraméthylpipéridine, la N-hydroxyéthyl-4-amino-2,2,6,6-tétraméthylpipéridine, la N-méthoxyéthyl-4-amino-2,2,6,6-tétraméthylpipéridine, la N-méthoxyéthyl-4-amino-2, 2, 6, 6-tétraméthylpipéridine, la N',N'-diméthylaminoéthyl-4-amino-2,2,6,6-tétraméthylpipéridine, la N-morpholinoéthyl-4-amino-2, 2, 6, 6-tétraméthylpipéridine, la N-pipérazinoéthyl-4-amino-2,2,6,6-tétraméthylpipéridine, la 4-morpholino-2,2,6,6-tétraméthylpipéridine, sont contenues.

6. Composition de résine époxyde selon au moins l'une quelconque des revendications précédentes, **caractérisée en ce qu'**en tant que composant B2)

   a) de l'isophorone-diamine,
   b) et/ou une combinaison d'isophorone-diamine et de polyoxypropylène-diamine et/ou de polyoxypropylènetriamine,
   c) et/ou des durcisseurs adduits à base des produits de réaction de composés d'époxyde et des amines B2) susmentionnées ou une combinaison des amines B2) susmentionnées,

   sont utilisés.

7. Composition de résine époxyde selon au moins l'une quelconque des revendications précédentes, **caractérisée en ce que** des amines tertiaires sont contenues en tant qu'accélérateur de durcissement C).

8. Utilisation d'une composition de résine époxyde selon au moins l'une quelconque des revendications précédentes pour la fabrication de composites.

9. Composants composites, essentiellement formés par :

   1) au moins un support fibreux et éventuellement des matériaux de noyau, et
   2) une composition de résine époxyde selon au moins l'une quelconque des revendications 1 à 7 précédentes.

10. Procédé de fabrication de composites selon la revendication 9 par les étapes de procédé suivantes :

    I. la préparation d'une composition selon la revendication 1 ;
    II. l'imprégnation d'une structure constituée par des supports fibreux et éventuellement des matériaux de noyau supplémentaires avec la composition de I. dans un moule ou dans un outil par un procédé d'imprégnation par une résine liquide, ou l'imprégnation de supports fibreux et l'enroulement sur un mandrin,
    III. le durcissement de la composition réactive pour former le composant composite, et
    IV. le démoulage du composant fini du moule.

11. Utilisation des composites selon la revendication 9 dans la construction de bateaux et de navires, dans la technologie aéronautique et astronautique, dans la construction d'automobiles, pour les deux-roues, de préférence les motos et les vélos, dans les domaines de l'automobile, du bâtiment, de la technologie médicale, du sport, de l'industrie électrique et électronique, des installations de génération d'énergie.

12. Utilisation des composites selon la revendication 9 pour la fabrication de pales de rotor d'éoliennes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2640408
- DE 2640409
- DE 2640410
- DE 2950067
- DE 3328134

- EP 394495 A1
- US 4775733 A1
- WO 2007096425 A2
- WO 9955772 A
- EP 669353 A

**In der Beschreibung aufgeführte Nicht-Patentliteratur**

- **A. M. PAQUIN.** Epoxidverbindungen und Epoxidharze. Springer Verlag, 1958
- *Handbook of Epoxy Resins,* 1967
- Epoxy Resins - Chemistry and Technology; Curing Agents and Modifiers. 1988, 481-482

- **H. LEE ; K. NEVILLE.** Handbook of Epoxy Resins. McGraw-Hill, 1967
- **R. GÄCHTER ; H. MÜLLER.** Plastics Additives. Hanser, 1983